# EUROPÄISCHE PATENTSCHRIFT

(11) **EP 2 896 728 B1**
(45) Veröffentlichungstag und Bekanntmachung des Hinweises auf die Patenterteilung: **18.01.2017**
(21) Anmeldenummer: 15151612.7
(22) Anmeldetag: 19.01.2015
(51) Int. Cl.: D03D 15/00, D02G 3/44, D02G 3/12

(54) **Filtergewebe**
Filter fabric
Tissu filtrant

(30) Priorität: 17.01.2014 WO PCT/EP2014/050889
(43) Veröffentlichungstag der Anmeldung: 22.07.2015
(73) Patentinhaber: Bloch, Klaus, 53757 Sankt Augustin (DE)
(72) Erfinder: Bloch, Klaus, 53757 Sankt Augustin (DE)
(74) Vertreter: Wagner Albiger & Partner Patentanwälte mbB

(56) Entgegenhaltungen:
- DE-U1- 20 013 839
- GB-A- 1 474 300
- JP-A- 2007 039 839
- US-A- 6 025 282

## Beschreibung

Die Erfindung betrifft Filtergewebe, umfassend miteinander verwobene Kett- und Schussgarne auf Basis von Polymerkunststoffen, wobei die Kettgarne aus Kettfäden und die Schussgarne aus Schussfäden gebildet sind.

Derartige Filtergewebe sind vielfältig bekannt. In einer Reihe von speziellen Filteranwendungen benötigt man Filtermedien, wie Gewebe, welche antistatische bzw. elektrisch leitfähige Eigenschaften aufweisen müssen. Beispielsweise seien hier die Filtration von staubbelasteten Medien genannt, bei denen ein antistatisches Filtergewebe der unerwünschten Anhaftung des staubbelasteten Materials am Filtergewebe vorbeugen kann oder explosionsgefährdete Arbeitsumgebungen. Beispielsweise erfordert die Filtration von Palmöl den Einsatz von elektrisch leitfähigen und antistatischen Filtermedien, wie Filtergewebe, um bei der Filtration auf Filterpressen die Explosionsgefahr zu vermeiden.

Es ist bekannt, leitfähige Filtergewebe z.B. aus Polyamid 11 und Polypropylen einzusetzen, welche geerdet sind. Es ist auch bereits vorgeschlagen worden, zur Erhöhung bzw. Verbesserung der antistatischen und leitfähigen Eigenschaften in einem gewissen Abstand von z.B. 1 bis 2 cm in Schussrichtung des Filtergewebes einen Faden einzuweben, der aus etwa 80% Polyester und 20% eines gesponnenen Edelstahls versponnen ist. In Kettrichtung des Gewebes wird an einem oder beiden Rändern desselben eine Litze eingewebt, die aus dem gleichen Polyester/Edelstahlmaterial hergestellt wird, so dass über die gesamte Filterfläche eine elektrische Leitfähigkeit sichergestellt ist. Dieses bekannte Verfahren ist jedoch äußerst aufwendig und überdies durch Verwendung des gesponnenen Edelstahlfadens aufgrund hoher Herstellungspreise desselben sehr kostennachteilig.

Ein Filtergewebe gemäß dem Oberbegriff des Anspruchs 1 ist aus DE 200 13 839 U1 bekannt.

Darüber hinaus besteht bei den bekannten Filtergeweben das Problem, dass sich aus dem einen hohen Polyesteranteil aufweisenden Spinnfaden einzelne Filamente lösen und in das Filtrat gelangen können, was vor allem bei medizinischen Vorprodukten äußerst problematisch ist. Andererseits lassen sich die eingesetzten gesponnenen Edelstahlfasern aus technischen Gründen fast ausschließlich mit Polyesterfasern oder Aramiden zu den webfähigen Fäden verspinnen, die nur bedingt einschlägige Normen, wie FDA-Normen, erfüllen.

Aufgabe der Erfindung ist es daher, ein elektrisch leitfähiges und insoweit auch antistatisch wirksames Filtergewebe vorzuschlagen, welches zu deutlich verringerten Kosten herstellbar ist, sich in den unterschiedlichsten Anwendungsbereichen problemlos einsetzen lässt und überdies mindestens ebenbürtige elektrische Leitfähigkeit und antistatische Eigenschaft wie der Stand der Technik aufweist.

Zur Lösung der gestellten Aufgabe wird erfindungsgemäß ein Filtergewebe gemäß den Merkmalen des Patentanspruchs 1 vorgeschlagen.

Vorteilhafte Ausgestaltungen und Weiterbildungen der Erfindung sind Gegenstand der abhängigen Ansprüche.

Die Erfindung schlägt vor, zumindest einige der Kettgarne so auszubilden, dass sie Kettfäden umfassen, die gemeinsam mit mindestens einem monofilen Edelstahldraht zu dem Kettgarn verzwirnt sind und/oder zumindest einige der Schussgarne Schussfäden umfassen, die gemeinsam mit mindestens einem monofilen Edelstahldraht zu den Schussgarnen verzwirnt sind.

Im Ergebnis wird ein Filtergewebe erhalten, welches wahlweise im Bereich einiger oder sämtlicher Kettgarne, im Bereich einiger oder aller Schussgarne oder sowohl im Bereich einiger oder aller Kettgarne und sowohl einiger oder aller Schussgarne einen durch Verzwirnen eingebrachten Edelstahldraht zusätzlich aufweist, der aufgrund seiner monofilen Ausführung über die gesamte Länge der Kett- bzw. Schussgarne verläuft und insbesondere einen Teil der Oberfläche der Kett- und/oder Schussgarne bildet, so dass an den Kreuzungspunkten der Kett- und Schussgarne durchgängige elektrisch leitfähige Verbindungen untereinander geschaffen werden.

Es wurde im Rahmen der Erfindung festgestellt, dass ein solches, mit zumindest in einige der Kett- bzw. Schussgarne eingearbeiteten Edelstahldrähten hergestelltes Filtergewebe eine hervorragende elektrische Leitfähigkeit aufweist, die durchaus mit Metallplatten vergleichbar ist, was es ermöglicht, das Filtergewebe elektrisch leitend mit einer Tragstruktur zu verbinden und die Tragstruktur zu erden. Ein solches Filtergewebe wird dadurch überaus unempfindlich gegenüber Staubbelastung, die bislang an handelsüblichen Filtergeweben wegen der Neigung zur statischen Aufladung ein großes Problem darstellte.

Das erfindungsgemäße Filtergewebe bietet einen spezifischen Oberflächenwiderstand von höchstens 10⁵ Ω, vorzugsweise höchstens 10³ Ω.

Durch die Abwesenheit einer statischen Aufladung kann das erfindungsgemäße Filtergewebe folglich auch in explosionsgefährdeten Bereichen und Anwendungen problemlos eingesetzt werden.

Nach einem Vorschlag der Erfindung wird der mit den Kett- und/oder Schussfäden verzwirnte Edelstahldraht aus einem V2A- oder V4A-Edelstahl hergestellt.

Unter V2A-Edelstahl wird ein Edelstahl des Typs 1.4301 (X5CrNi18-10) verstanden, früher auch 1.4300 (X12CrNi18-8). Demgegenüber wird unter einem V4A-Edelstahl ein solcher verstanden, der zusätzlich mit 2% Molybdän (Mo) legiert ist, was diesen Stahl noch widerstandfähiger gegen Korrosion durch chloridhaltige Medien, wie z.B. Salzwasser macht. Die allgemeine Bezeichnung für V4A-Edestahl lautet 1.4401 (X5CrNiMo17-12-2).

Um die Herstellung der Filtergewebe aus miteinander verwobenen Kett- und Schussgarnen nicht negativ zu beeinflussen, wird nach einem weiteren Vorschlag der Erfindung vorgesehen, den Edelstahldraht in einem Durchmesser von 0,02 bis 0,30 mm auszuführen. Insbesondere kann ein solcher Edelstahldraht einen Durchmesser von etwa 0,05 mm aufweisen. Derartige feine Edelstahldrähte behindern die Verarbeitung der aus verzwirnten Kett- bzw. Schussfäden sowie mindestens einem solchen Edelstahldraht hergestellten Kett- und Schussgarne im Rahmen der Verwebung zu einem Filtergewebe nicht, sorgen jedoch für die gewünschte elektrische Leitfähigkeit und antistatische Eigenschaft.

In an sich bekannter Weise können die Kett- und Schussgarne der erfindungsgemäßen Filtergewebe in allen bekannten Bindungsarten erfolgen.

Die Kett- und Schussfäden des erfindungsgemäßen Filtergewebes können aus allen bekannten Synthesematerialien bestehen, sei es in monofiler Form oder als Filamentgarn oder gesponnenem Fasergarn. Beispielhaft werden Fluorpolymerkunststoffe, wie Polytetrafluorethylen oder auch Polyamide und Polyolefine, insbesondere Polypropylen genannt, was nachfolgend anhand von Ausführungsbeispielen noch näher erläutert wird.

Das Filtergewebe kann beispielsweise Kettgarne aus mehreren in einer ersten Drehrichtung einzeln verdrillten Kettfäden einer Garndichte von 10 bis 120 Garnen/cm gebildet sein. Auch sind Garndichten von 75 bis 150 Garnen/cm möglich, wenn die Kettgarne lediglich aus einem einzelnen verdrillten Kettfaden bestehen und die Edelstahldrähte lediglich im Bereich der Schussgarne zusammen mit den Schussfäden zu den Schussgarnen verzwirnt werden.

Geeignete Garnstärken für die Kett- und Schussfäden liegen im Bereich von 0,10 bis 1,5 mm Durchmesser bei monofilen Kett- und Schussfäden und bei Filamenten für die Kett- und Schussfäden bei 150 bis 5.000 dtex und bei gesponnenen Kett- und Schussfäden von Nm 110/1 bis Nm 5/1.

Im Rahmen der Erfindung ist vorgesehen, einzelne oder alle der vorangehend beschriebenen Kettgarne und/oder Schussgarne darüber hinaus während des Verzwirnens zu den Kettgarnen oder Schussgarnen unter Hinzunahme mindestens eines Edelstahldrahts gemeinsam zu verzwirnen, d.h. beispielsweise zur Ausbildung eines Kettgarns werden mehrere in der ersten Drehrichtung einzeln verdrillte Kettfäden und der mindestens eine Edelstahldraht gemeinsam entgegen der ersten Drehrichtung verzwirnt und/oder die Schussfäden sowie mindestens ein Edelstahldraht werden mit der entsprechenden Tourenzahl gemeinsam zu den Schussgarnen verzwirnt.

Sofern die solchermaßen hergestellten Filtergewebe elektrisch leitend mit einer Tragstruktur verbunden werden sollen und die Tragstruktur geerdet werden soll, wird beispielsweise randseitig des Filtergewebes eine entsprechend elektrisch leitende Einfassung vorgesehen, die eine elektrische Verbindung mit der Tragstruktur erhält und die Tragstruktur wird anschließend entsprechend geerdet montiert.

Aufgrund des besonders feinen Durchmessers der erfindungsgemäß vorgesehenen Edelstahldrähte von etwa 0,02 bis 0,30 mm, beispielsweise 0,05 mm kann dieser bei Bedarf in einige oder alle der Kett- und/oder Schussgarne bei deren Herstellung mit eingezwirnt werden.

Die Erfindung wird nachfolgend anhand der ein Ausführungsbeispiel darstellenden Zeichnung weiter erläutert. Es zeigen:
- Figur 1: in schematisierter Darstellung ein Filtergewebe gemäß der Erfindung;
- Figur 2: ein Kett- bzw. Schussgarn zum Einsatz in dem erfindungsgemäßen Filtergewebe.

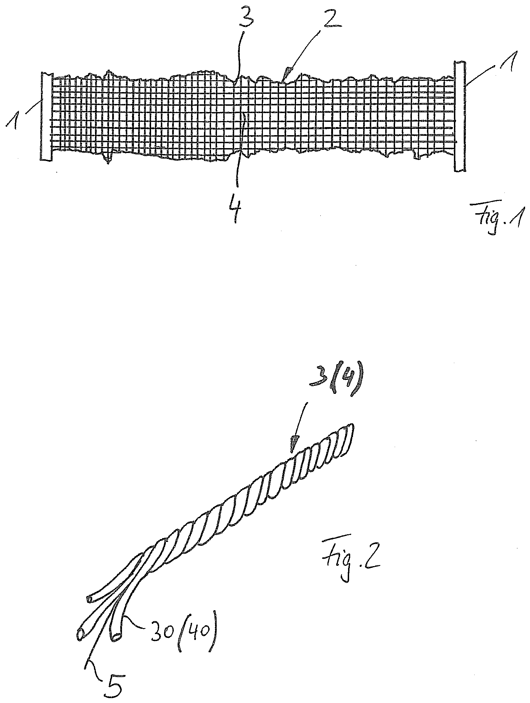

Aus der Figur 1 ist in stark vereinfachter Darstellung ein Filtergewebe umfassend eine beispielsweise metallische und in hier nicht dargestellter Weise geerdet montierte Tragstruktur 1 sowie ein von der Tragstruktur 1 aufgespanntes Filtergewebe 2 dargestellt, wobei das Filtergewebe 2 aus miteinander verwobenen Kett- und Schussgarnen 3, 4 auf Basis von Polymerkunststoffen gebildet ist.

Die Kett- und Schussgarne 3, 4 sind beispielsweise in Atlas-Bindung zu dem Filtergewebe 2 gewebt, jedoch ist das erfindungsgemäße Filtergewebe nicht auf diese Bindungsart beschränkt. In Betracht kommen z.B. auch Köper-, Kreuzköper-, Leinwand- und Panama-Bindungen.

Wesentliches Merkmal des aus der Figur 1 ersichtlichen Filtergewebes 2 ist es, dass zumindest einige der Kett- und Schussfäden 3, 4 vorzugsweise in regelmäßiger Anordnung einen aus der Figur 2 ersichtlichen Aufbau aufweisen.

Diese einzelnen Kett- und Schussgarne 3, 4 sind hierbei aus mehreren, hier drei miteinander verzwirnten Kettfäden 30 bzw. im Falle eines Schussgarns 4 aus entsprechenden Schussfäden 40 gebildet, die in nicht näher dargestellter Weise zunächst einzeln mit beispielsweise 150 Touren/m in einer ersten Drehrichtung verdrillt und anschließend gemeinsam mit 200 Touren/m entgegen der ersten Drehrichtung, d.h. in einer zweiten Drehrichtung verzwirnt werden. Zusätzlich zu den verzwirnten Kettfäden 30 bzw. Schussfäden 40 ist dabei jeweils ein monofiler und elektrisch leitfähiger Edelstahldraht 5 gemeinsam mit den Kettfäden 30 bzw. Schussfäden 40 zu dem Kettgarn 3 bzw. Schussgarn 4 verzwirnt, so dass dieser in regelmäßigen Abständen an der Oberfläche der Kettgarne 3 bzw. Schussgarne 4 in Erscheinung tritt. Die übrigen Kettgarne 3 bzw. Schussgarne 4 des Filtergewebes 2 weisen einen identischen Aufbau auf, jedoch fehlt hierbei der eingearbeitete Edelstahldraht 5.

Es ist selbstverständlich auch möglich, sämtliche Kett- und Schussgarne 3, 4 mit eingezwirntem Edelstahldraht 5 zu versehen.

Der Edelstahldraht kann beispielsweise aus V4A-Edelstahl eines Durchmessers von 0,05 mm hergestellt sein.

Aufgrund der Präsenz des Edelstahldrahtes 5 an den Oberflächenbereichen der Kett- und Schussgarne 3, 4 wird die Verarbeitbarkeit, d.h. insbesondere deren Webbarkeit zum Filtergewebe in keiner Weise beeinträchtigt, wofür sich die hohe Wechsellastfähigkeit des Edelstahldrahtes 5 und dessen äußerst feiner Durchmesser maßgeblich verantwortlich zeigen.

Die eingearbeiteten monofilen Edelstahldrähte verleihen dem Filtergewebe 2 eine extrem hohe elektrische Leitfähigkeit, die es ermöglicht, in Verbindung mit einer entsprechend geerdeten Tragstruktur 1 und einer elektrisch leitenden Verbindung zwischen dem Filtergewebe 2 und der Tragstruktur 1 in dem Filtergewebe 2 entstehende elektrostatische Aufladung unmittelbar abzuleiten, so dass einer durch elektrostatische Aufladung bedingten Anhaftung von Staub oder sonstigen Partikeln auf der Oberfläche des Filtergewebes 2 wirkungsvoll entgegengewirkt wird. Da die Kett- und Schussfäden an ihren Kreuzungspunkten überdies infolge der sich ebenfalls kreuzenden eingearbeiteten Edelstahldrähte eine elektrische Verbindung aufweisen, wird eine überragende elektrische Leitfähigkeit vergleichbar mit Metallplatten erreicht, sodass jedwede statische Aufladung wirkungsvoll unterbunden wird und auch ein Einsatz solcher Filtergewebe in explosionsgefährdeten Bereichen und bei Einsatz explosiver Medien möglich ist.

Die Art und Anzahl der verwendeten Edelstahldrähte innerhalb eines einzelnen Kettgarnes und/oder Schussgarnes und die Auswahl der Anzahl von mit dem Edelstahldraht versehenen Kettgarnen und/oder Schussgarne im Rahmen des gesamten Filtergewebes ist vom Fachmann je nach Anwendungsfall beliebig auswählbar.

Ausführungsbeispiele:
Zur Herstellung eines Filtergewebes zur Filtration von Palmöl werden Kett- und Schussfäden aus Monofilen auf Basis von Nylon-11 oder Polypropylen mit einem Durchmesser von 0,165 mm verwendet. Es werden in Kettrichtung 110 Kettfäden/cm und in Schussrichtung 42 Schussfäden/cm verarbeitet, wobei stets identische Monofile des Durchmessers 0,165 mm zum Einsatz kommen. Bei den Kettfäden wird jeder fünfzigste Faden mit einem V4A-Edelstahldraht des Durchmessers 0,05 mm mit 150 Touren/m verzwirnt, während in Schussrichtung jeder zwanzigste Faden aus einem solchen Zwirn hergestellt wird. Das erhaltene Filtergewebe weist einen spezifischen Oberflächenwiderstand von weniger als 10³ Ω auf und kann problemlos auf ca. 20 Liter fixiert/kalandriert werden und weist 4620 Poren/cm² auf.

Selbstverständlich ist es in Abwandlung dieses Ausführungsbeispiels möglich, auch jeden einzelnen Kett- und Schussfaden aus derartigen Zwirnen aus PP-oder Nylon-11-Monofil und Edelstahldraht herzustellen oder auch nur beliebige Abstufungen, z.B. jeden zehnten, zwanzigsten oder hundertsten, zweihundertsten Faden. Die übrigen Kett- und Schussfäden bestehen aus reinem PP- oder Nylon-11-Monofil des Durchmessers 0,165 mm. Das so produzierte Filtergewebe ist hochflexibel und kann ohne Schwierigkeiten thermofixiert und kalandriert werden. Es können auch wahlweise zwei oder mehr Monofilfäden mit dem V4A-Edelstahldraht verzwirnt werden. Auch ein multifiles Filamentgarn oder ein gesponnener Faden kann mit einem solchen V4A-Edelstahldraht verzwirnt und als leitfähiges Material in das Filtergewebe eingewebt werden.

In einem weiteren Ausführungsbeispiel wurde für den Anwendungzweck der Heißgasfiltration ein Stützgewebe aus einem erfindungsgemäßen Filtergewebe hergestellt, wobei die Kett- und Schussgarne auf Basis von PTFE gebildet waren und mit dem bereits genannten Edelstahldraht verzwirnt wurden. Auf dieses solchermaßen nach der Erfindung hergestellte Filtergewebe, welches als Stützgewebe bzw. Scrim diente, wurde eine PTFE- oder PPS-Flocke genadelt, so dass ein Nadelfilz mit hervorragender elektrischer Leitfähigkeit zu äußerst geringen Herstellungskosten erhalten wurde und beste elektrische Leitfähigkeit bzw. antistatische Eigenschaft aufwies.

## Patentansprüche

1. Filtergewebe, umfassend miteinander verwobene Kett- und Schussgarne (3, 4) auf Basis von Polymerkunststoffen, wobei die Kettgarne (3) aus Kettfäden (30) und die Schussgarne (4) aus Schussfäden (40) gebildet sind, **dadurch gekennzeichnet, dass**
• zumindest einige der Kettgarne (3) Kettfäden (30) umfassen, die gemeinsam mit mindestens einem monofilen Edelstahldraht (5) zu den Kettgarnen (3) verzwirnt sind; und/oder
• zumindest einige der Schussgarne (4) Schussfäden (40) umfassen, die gemeinsam mit mindestens einem monofilen Edelstahldraht (5) zu den Schussgarnen (4) verzwirnt sind.

2. Filtergewebe nach Anspruch 1, **dadurch gekennzeichnet, dass** der Edelstahldraht (5) aus V2A- oder V4A-Edelstahl hergestellt ist.

3. Filtergewebe nach Anspruch 1 oder 2, **dadurch gekennzeichnet, dass** der Edelstahldraht einen Durchmesser von 0,02 bis 0,30 mm aufweist.

4. Filtergewebe nach einem der Ansprüche 1 bis 3, **dadurch gekennzeichnet, dass** die Kett- und Schussgarne (3, 4) monofile Kettfäden, Kettfäden aus Filamentgarnen oder gesponnene Fasergarne umfassen.

5. Filtergewebe nach einem der Ansprüche 1 bis 4, **dadurch gekennzeichnet, dass** die Kett- und Schussfäden (30, 40) aus Polytetrafluorethylen oder einem Polyolefin oder Polyamiden gebildet sind.

6. Filtergewebe nach Anspruch 5, **dadurch gekennzeichnet, dass** die Kett- und Schussfäden (30, 40) aus Polypropylen gebildet sind.

7. Filtergewebe nach einem der Ansprüche 1 bis 6, **dadurch gekennzeichnet, dass** es Kettgarne (3) aus mehreren in einer ersten Drehrichtung jeweils einzeln verdrillten Kettfäden (30) einer Garndichte von 10 bis 120 Garnen/cm umfasst.

8. Filtergewebe nach einem der Ansprüche 1 bis 6, **dadurch gekennzeichnet, dass** es Kettgarne (3) aus einem einzelnen in einer ersten Drehrichtung verdrillten Kettfäden (30) einer Garndichte von 75 bis 150 Garnen/cm umfasst.

9. Filtergewebe nach einem der Ansprüche 7 oder 8, **dadurch gekennzeichnet, dass** zur Ausbildung eines Kettgarns (3) mehrere in der ersten Drehrichtung einzeln verdrillte Kettfäden (30) und mindestens ein Edelstahldraht (5) gemeinsam entgegen der ersten Drehrichtung verzwirnt sind.

10. Filtergewebe nach einem der Ansprüche 1 bis 9, **dadurch gekennzeichnet, dass** es einen spezifischen Oberflächenwiderstand von höchstens 10⁵ Ω aufweist.

11. Filtergewebe nach einem der Ansprüche 1 bis 10, **dadurch gekennzeichnet, dass** das Filtergewebe in einem Nadelfilz angeordnet ist.

## Claims

1. Filter cloth, comprising interwoven warp and weft yarns (3, 4) based on polymer plastics, wherein the warp yarns (3) are formed from warp threads (30) and the weft yarns (4) are formed from weft threads (40), **characterised in that**
• at least some of the warp yarns (3) comprise warp threads (30) which are twisted together with at least one monofilament stainless steel wire (5) to form the warp yarns (3); and/or
• at least some of the weft yarns (4) comprise weft threads (40) which are twisted together with at least one monofilament stainless steel wire (5) to form the weft yarns (4).

2. Filter cloth according to claim 1, **characterised in that** the stainless steel wire (5) is produced from V2A- or V4A- stainless steel.

3. Filter cloth according to claim 1 or 2, **characterised in that** the stainless steel wire has a diameter from 0,02 to 0,30 mm.

4. Filter cloth according to any one of claims 1 to 3, **characterised in that** the warp and weft yarns (3, 4) comprise monofilament warp threads, warp threads from filament yarn or spun yarns.

5. Filter cloth according to any one of claims 1 to 4, **characterised in that** the warp and weft threads (30, 40) are formed from polytetrafluorethylene or a polyolefin or polyamides.

6. Filter cloth according to claim 5, **characterised in that** the warp and weft threads (30, 40) are formed from polypropylene.

7. Filter cloth according to any one of claims 1 to 6, **characterised in that** it comprises warp yarns (3) from several warp threads (30) individually twisted in a first direction and having a yarn density from 10 to 120 yarns/cm.

8. Filter cloth according to any one of claims 1 to 6, **characterised in that** it comprises warp yarns (3) from a single warp thread (30) twisted in a first direction and having a yarn density from 75 to 150 yarns/cm.

9. Filter cloth according to one of the claims 7 or 8, **characterised in that** for constituting a warp yarn (3) a plurality of warp threads (30) individually twisted in a first direction and at least one stainless steel wire (5) are twisted together opposite to the first direction.

10. Filter cloth according to any one of claims 1 to 9, **characterised in that** it has a surface resistance of at most 10⁵ Ω.

11. Filter cloth according to any one of claims 1 to 10, **characterised in that** the filter cloth is arranged in a needle felt.

## Revendications

1. Tissu filtrant comprenant des fils de chaîne et des fils de trame mutuellement tissés (3, 4) à base de matières plastiques polymères, dans lequel les fils de chaîne (3) sont constitués de filaments de chaîne (30) et les fils de trame (4) de filaments de trame (40), **caractérisé en ce que** :
• au moins certains des fils de chaîne (3) comprennent des filaments de chaîne (30) qui sont retordus conjointement avec un fil d'acier fin monofilaire (5) pour former les fils de chaîne (3) ; et/ou
• au moins certains des fils de trame (4) comprennent des filaments de trame (40) qui sont retordus conjointement avec au moins un fil d'acier fin monofilaire (5) pour former les fils de trame (4).

2. Tissu filtrant selon la revendication 1, **caractérisé en ce que** le fil d'acier fin (5) est constitué d'acier fin V2A ou V4A.

3. Tissu filtrant selon la revendication 1 ou la revendication 2, **caractérisé en ce que** le fil d'acier fin présente un diamètre de 0,02 à 0,30 mm.

4. Tissu filtrant selon l'une quelconque des revendications 1 à 3, **caractérisé en ce que** les fils de chaîne et les fils de trame (3, 4) comprennent des filaments de chaîne monofilaires, des filaments de chaîne formés de fils continus ou des fils fibreux filés.

5. Tissu filtrant selon l'une quelconque des revendications 1 à 4, **caractérisé en ce que** les filaments de chaîne et les filaments de trame (30, 40) sont formés de polytétrafluoréthylène ou d'une polyoléfine ou de polyamides.

6. Tissu filtrant selon la revendication 5, **caractérisé en ce que** les filaments de chaîne et les filaments de trame (30, 40) sont formés de polypropylène.

7. Tissu filtrant selon l'une quelconque des revendications 1 à 6, **caractérisé en ce qu'**il comprend des fils de chaîne (3) formés de plusieurs filaments de chaîne (30) respectivement torsadés individuellement dans un premier sens de rotation avec une densité de fils de 10 à 120 fils/cm.

8. Tissu filtrant selon l'une quelconque des revendications 1 à 6, **caractérisé en ce qu'**il comprend des fils de chaîne (3) formés d'un seul filament de chaîne (30) torsadé dans un premier sens de rotation avec une densité des fils de 75 à 150 fils/cm.

9. Tissu filtrant selon l'une quelconque des revendications 7 ou 8, **caractérisé en ce que**, pour former un fil de chaîne (3), plusieurs filaments de chaîne (30) individuellement torsadés dans le premier sens de rotation et au moins un fil d'acier fin (5) sont conjointement retordus dans le sens opposé au premier sens de rotation.

10. Tissu filtrant selon l'une quelconque des revendications 1 à 9, **caractérisé en ce qu'**il présente une résistance superficielle spécifique au maximum de 10⁵ Ω.

11. Tissu filtrant selon l'une quelconque des revendications 1 à 10, **caractérisé en ce que** le tissu filtrant est agencé dans un feutre aiguilleté.
